(19) Europäisches Patentamt
European Patent Office
Office européen des brevets

(11) **EP 0 813 987 B1**

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(51) Int Cl.⁷: **B60K 31/00**, G01S 13/93

(21) Anmeldenummer: **97102861.8**

(22) Anmeldetag: **21.02.1997**

(54) **Verfahren zur Abstandsregelung für ein Kraftfahrzeug**

Method for controlling distance between a vehicle and other objects

Procédé de commande de distance entre un véhicule et d'autres objets

(84) Benannte Vertragsstaaten:
**DE ES FR GB**

(30) Priorität: **20.06.1996 DE 19624615**

(43) Veröffentlichungstag der Anmeldung:
**29.12.1997 Patentblatt 1997/52**

(73) Patentinhaber: **Volkswagen Aktiengesellschaft**
**38436 Wolfsburg (DE)**

(72) Erfinder:
• **Timm, Klaus, Prof.**
**21465 Wentorf (DE)**
• **Weisser, Hubert, Dr.**
**38165 Lehre (DE)**
• **Bergholz, Ralf, Dr.**
**38108 Braunschweig (DE)**

(56) Entgegenhaltungen:
EP-A- 0 612 641          WO-A-95/10053
DE-A- 4 100 993         DE-A- 4 201 970
DE-A- 19 711 819        FR-A- 2 732 651
GB-A- 2 295 698         US-A- 4 621 705
US-A- 5 189 619

• **PROTZEL ET AL: "ABSTANDSREGELUNG VON FAHRZEUGEN MIT FUZZY CONTROL, Tagungsband der 3. Dortmunder Fuzzy Tage, Reihe Informatik Aktuell "**, SPRINGER VERLAG XP002087566 * Seite 212 - Seite 221 *

**Beschreibung**

Die Erfindung betrifft ein Verfahren zur Abstandsregelung für ein Kraftfahrzeug, bei dem über Sensoreinrichtungen zumindest die momentane Fahrgeschwindigkeit des Kraftfahrzeuges und der momentane Abstand zu einem vor dem Kraftfahrzeug befindlichen Objekt ermittelt werden und aus den erfaßten Größen eine abstandsabhängige Sollbeschleunigung gebildet wird sowie eine Vorrichtung zur Durchführung des Verfahrens.

Die Entwicklungen im Bereich der Fahrzeugelektronik haben dazu geführt, daß Systemen, die den Fahrzeugführer von routinemäßigen Funktionen entlasten, eine steigende Bedeutung zukommt. Hierzu zählt u. a. die hinlänglich bekannte Geschwindigkeitsregelung, bei der der Fahrer eine Wunschgeschwindigkeit vorgeben kann, die dann vom System eingeregelt wird.

Bei steigendem Verkehrsaufkommen ist es notwendig, die Geschwindigkeitsregelung zusätzlich von der vorhandenen Verkehrssituation abhängig zu machen, da ansonsten der Fahrer gezwungen ist, fortlaufend in die Regelung einzugreifen.

In der Veröffentlichung "Abstandsregelung von Fahrzeugen mit Fuzzy Control", Tagungsband der 3. Dortmunder Fuzzy Tage, Reihe Informatik Aktuell, Springer Verlag 1993 wird eine Fuzzy-Abstandsregelung beschrieben, die einen vorgegebenen Sollabstand eines Fahrzeuges zu einem vorausfahrenden Kraftfahrzeug unter verschiedenen Randbedingungen automatisch einhält. Die gezeigte Fuzzy-Abstandsregelung, die einen 3-stufigen Fuzzy-Regler verwendet, benutzt einfache Min-Max Operatoren und die Schwerpunktmethode zur Defuzzyfikation nach jeder Stufe. Anstelle eines fest vorgegebenen Sollabstandes wird im ersten Fuzzy-Regler ein Sollabstand bestimmt, der neben der momentanen Fahrgeschwindigkeit vom Fahrertyp und der Witterung abhängt. Der Fahrertyp und die Witterung sind normierte Parameter mit einem vorgegebenen Wertebereich, die über eine externe Sensorik ermittelt werden, wobei die Lösung für die Fahrertyperkennung nicht gegeben wird. Die drei Eingangsdaten werden fuzzyfiziert und durch zwei Regelmatrizen auf den Sollabstand abgebildet. Im zweiten Fuzzy-Regler wird der von der Sensorik gelieferte momentane Abstand auf den im ersten Fuzzy-Regler ermittelten Sollabstand bezogen und eine Wunschbeschleunigung bestimmt, die zusätzlich noch vom Fahrertyp abhängt. Die Wunschgeschwindigkeit wird direkt vom Fahrer eingegeben und führt im dritten Fuzzy-Regler zu einer Schwellwertentscheidung in Abhängigkeit der vorgegebenen Wunschgeschwindigkeit. Anschließend wird in Abhängigkeit von Wunsch- und Istbeschleunigung die Pedalgeschwindigkeit und damit die Pedalstellung eines kombinierten Gas- und Bremspedals bestimmt.

Aus der GB-A-2 295 698 ist bekannt, daß eine Beschleunigungsanforderung (acceleration demand) bestimmt wird als die Summe des Produkts eines Abstandsfehlers (distance error) und eines ersten Verstärkungsfaktors einerseits und des Produkts eines Geschwindigkeitsfehlers (speed error) und eines zweiten Verstärkungsfaktors andererseits. Eine derartige Berechnung erfordert einen relativ leistungsfähigen und damit teuren Mikroprozessor.

Es ist die Aufgabe der Erfindung, ein möglichst einfaches und wenig rechenaufwendiges Verfahren zur Abstandsregelung und eine Vorrichtung zur Durchführung des Verfahrens zu schaffen, mit deren Hilfe ein Kraftfahrzeug in einer geschwindigkeitsregelnden Verkehrssituation geführt werden kann und bei Erfassung eines vor dem Kraftfahrzeug befindlichen Objektes die Eigengeschwindigkeit auf die Geschwindigkeit des vor dem Kraftfahrzeug befindlichen Objektes unter Einhaltung eines Sollabstandes eingestellt wird.

Die Aufgabe wird durch die Merkmale der Patentansprüche 1 und 20 gelöst. Vorteilhafte Aus- und Weiterbildungen sind in den Unteransprüchen dargestellt.

Gemäß der Erfindung wird zumindest aus einer vom Fahrzeugführer manuell vorgebbaren Wunschgeschwindigkeit eine geschwindigkeitsabhängige Sollbeschleunigung ermittelt und zu der abstandsabhängigen Sollbeschleunigung in Beziehung gesetzt. In Abhängigkeit der erzeugten Sollbeschleunigung wird eine Stellgröße für die Antriebsmaschine und/oder die Bremsanlage des Kraftfahrzeuges erzeugt.

Zur Ermittlung der abstandsabhängigen Sollbeschleunigung wird einem ersten Regler zumindest die momentane Fahrgeschwindigkeit des Kraftfahrzeuges zugeführt. In einer bevorzugten Ausbildung wird außerdem der vorherrschende Reibwert ermittelt und dient ebenfalls als Eingangsgröße des Reglers. Denkbar ist auch, dem Regler eine Größe für die vorherrschenden Sichtverhältnisse und/oder die Objektbeschleunigung zuzuführen. Aus seinen Eingangsgrößen bildet der Regler einen Sollabstand zu dem vor dem Kraftfahrzeug befindlichen Objekt. Außerdem wird über eine Sensoreinrichtung der momentane Abstand zu dem vor dem Kraftfahrzeug befindlichen Objekt ermittelt und auf den Sollabstand bezogen. Die so gebildete Abweichung wird mit der ebenfalls erfaßten Relativgeschwindigkeit zwischen dem Kraftfahrzeug und dem vor ihm befindlichen Objekt einem zweiten Regler zugeführt, der als Eingangsgröße zusätzlich die momentane Fahrgeschwindigkeit haben kann. Aus diesen Größen ermittelt der Regler die abstandsabhängige Sollbeschleunigung.

Die Ermittlung der fahrgeschwindigkeitsabhängigen Sollbeschleunigung erfolgt nach einer Ausbildung der Erfindung in einem dritten Regler, dem neben der momentanen Fahrgeschwindigkeit eine Größe, die die manuell vorgebbare Wunschgeschwindigkeit zu der momentanen Fahrgeschwindigkeit in Beziehung setzt, zugeführt wird.

Zur Berücksichtigung von bestimmten Fahrsituationen, beispielsweise Einschervorgängen, wird ein fahrsituationsabhängiger Sollabstand gebildet und in Abhängigkeit dieses fahrsituationsabhängigen Sollabstandes der vom ersten Regler gebildete Sollabstand verändert. In diesem Fall wird der momentane Abstand zu dem vor dem Kraftfahrzeug befindlichen Objekt auf den modifizierten Sollabstand bezogen.

Des weiteren kann vorgesehen werden, den Sollabstand auf das individuelle Fahrverhalten eines Fahrers abzubilden. Dafür besteht die Möglichkeit über einen vom Fahrer bedienbaren Schalter den Sollabstand bezüglich seiner Fahrweise eine Abstandskomponente hinzuzufügen. Eine andere Möglichkeit besteht darin, den ersten Regler, welcher den Sollabstand zumindest in Abhängigkeit der momentanen Fahrgeschwindigkeit erzeugt, an den jeweiligen Fahrer über einen Lernvorgang anzupassen.

Gemäß einer Weiterbildung der Erfindung wird die manuell vorgebbare Wunschgeschwindigkeit in Abhängigkeit einer kurvenabhängen Sollgeschwindigkeit verändert, um den Teil der Geschwindigkeitsregelung an das Durchfahren von Kurven anzupassen. Vorteilhafterweise wird dazu zumindest ein ermittelter Querschlupf oder die Querbeschleunigung und der vorherrschende Reibwert einem sechsten Regler zugeführt, der aus seinen Eingangsgrößen die kurvenabhängige Sollgeschwindigkeit bildet. In einer Ausführung weist der Regler außerdem die momentane Fahrgeschwindigkeit als Eingangsgröße auf.

Die manuell vorgebbare Wunschgeschwindigkeit kann außerdem in Abhängigkeit einer virtuellen Wunschgeschwindigkeit, welche aufgrund von sensierten Fahrzuständen gebildet wird, verändert werden.

Des weiteren ist bei einer Ausführung der Erfindung vorgesehen, daß einem siebenten Regler die momentane Fahrgeschwindigkeit und eine erfaßte Betätigungszeit einer ein Überholmanöver kennzeichnenden Einrichtung zugeführt werden und der Regler aus den beiden Größen einen Beschleunigungsfaktor erzeugt, mit welchen die Sollbeschleunigung zur Bildung der Stellgrößen für die Antriebsmaschine verändert wird.

Zur Bildung der Stellgröße für die Antriebsmaschine wird neben der Sollbeschleunigung dem vierten Regler vorzugsweise die momentane Fahrgeschwindigkeit und die Differenz zwischen der Sollbeschleunigung der Istbeschleunigung des Kraftfahrzeuges über Zeit zugeführt. Für eine Anpassung der Stellgröße an die Straßenverhältnisse ist es außerdem von Vorteil den vorherrschenden Reibwert dem Regler aufzuschalten.

Diese Größen werden nach einer weiteren Ausbildung der Erfindung auch dem fünften Regler zur Bildung der Stellgröße für die Bremsanlage zur Verfügung gestellt.

Der Vorteil des erfindungsgemäßen Verfahrens besteht darin, daß keine Zustandsgrößen der Antriebsmaschine oder der Bremsanlage benötigt werden.

Gemäß der Erfindung besteht die Vorrichtung zur Durchführung des Verfahrens aus einem System von untereinander verknüpften Fuzzy-Reglern, die zur Nachbildung des individuellen Fahrverhaltens jedes einzelnen Fahrers in ihren Zugehörigkeitsfunktionen und in ihren Regeln adaptierbar ausgebildet sein können.

Nachfolgend wird die Erfindung anhand eines Ausführungsbeispieles näher beschrieben. Die zugehörigen Zeichnungen zeigen:

Figur 1      ein schematisches Blockschaltbild einer Einrichtung zur Abstandsregelung und

Figur 2      ein Schaltbild der Abstandsregelung mit einem System von untereinander verknüpften Fuzzy-Reglern.

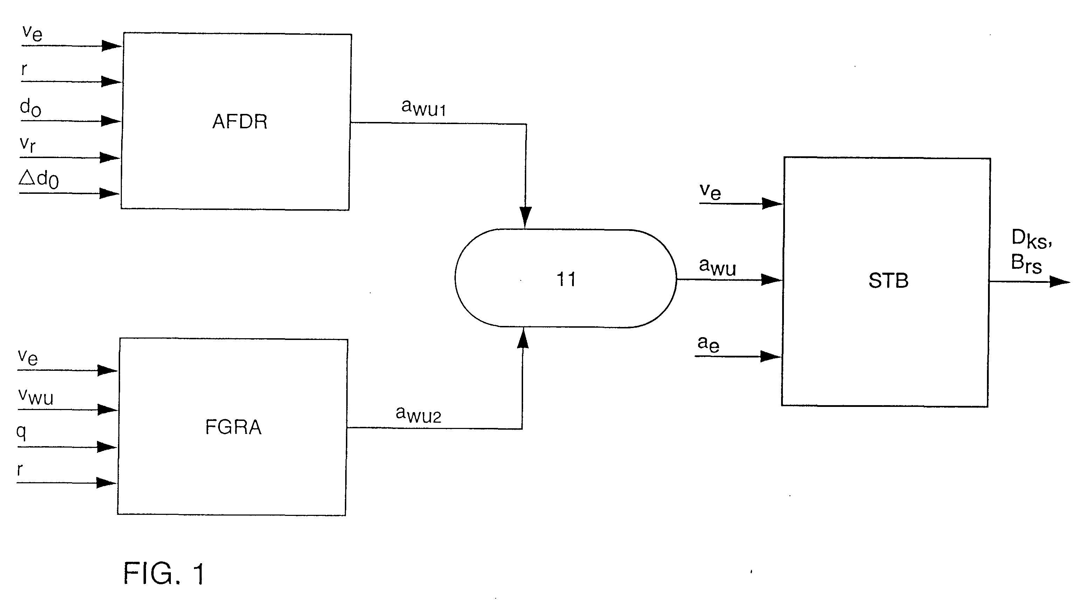

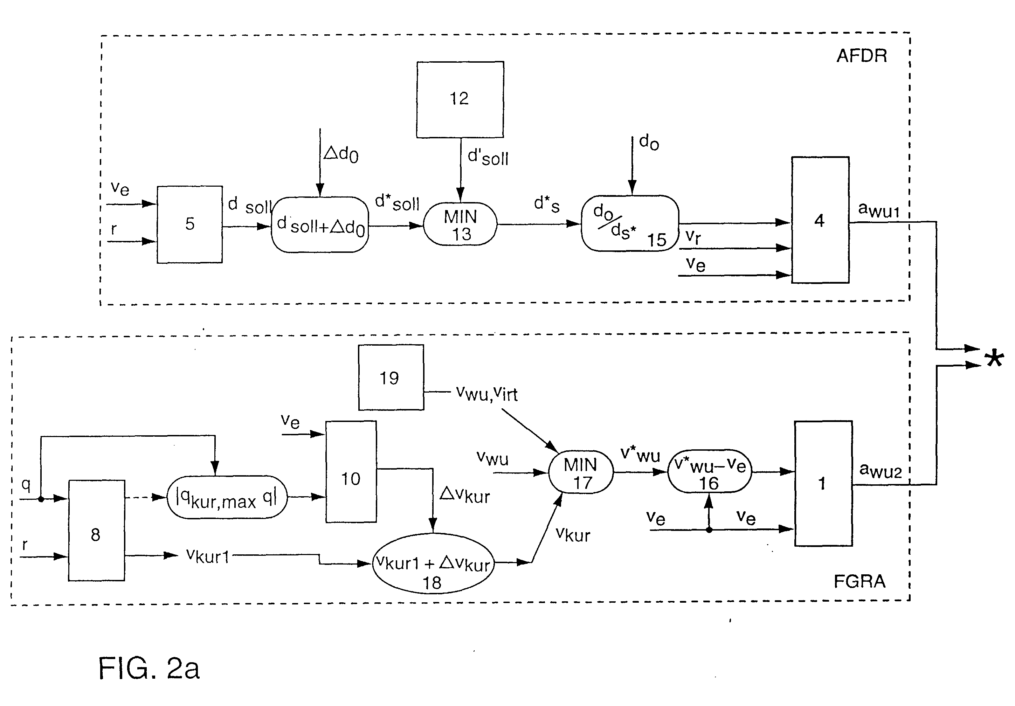

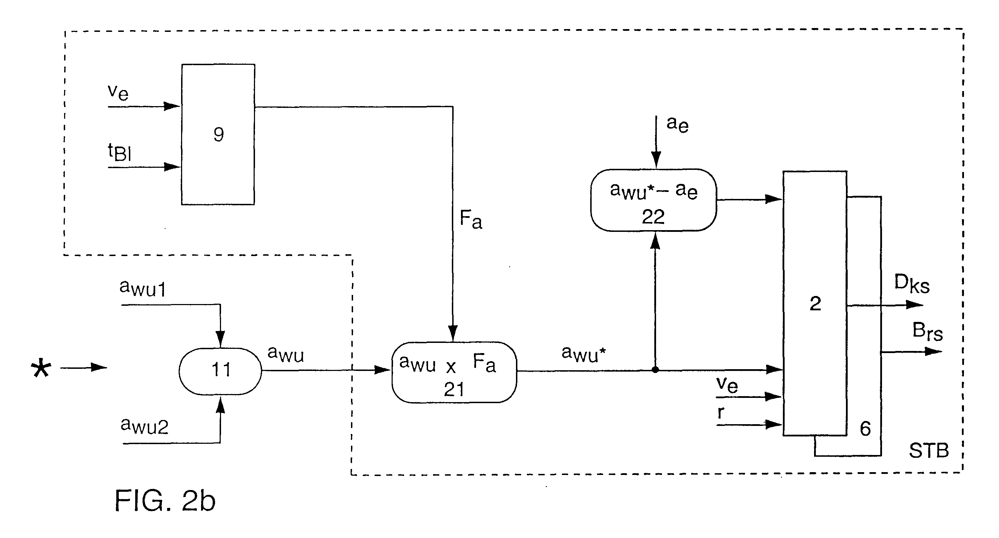

Die in Figur 1 gezeigte Einrichtung besteht aus der Einheit AFDR zur Regelung des Abstandes zu einem vor dem Kraftfahrzeug befindlichen Objekt, insbesondere einem vorausfahrenden Fahrzeug, und einer Einheit FGRA zur Regelung der Fahrgeschwindigkeit des Kraftfahrzeuges auf eine zumindest manuell durch den Fahrzeugführer vorgebbaren Wunschgeschwindigkeit $v_{wu}$. Die Einheit AFDR zur Regelung des Abstandes erzeugt in Abhängigkeit ihrer Eingangsgrößen $v_e$, r, $d_0$, $v_r$ und $\Delta d_0$, eine abstandsabhängige Sollbeschleunigung $a_{wu1}$ und die Einheit FGRA zur Regelung der Fahrgeschwindigkeit aufgrund ihrer Eingangsgrößen $v_e$, q, r, $v_{wu}$ eine geschwindigkeitsabhängige Sollbeschleunigung $a_{wu2}$. Die Bedeutung der Eingangsgrößen wird später anhand der Figur 2 näher erläutert.

Beide Sollbeschleunigungen $a_{wu1}$ und $a_{wu2}$ werden in dem Operator 11 fahrsituationsabhängig bewertet und in Abhängigkeit der Bewertung eine der beiden Sollbeschleunigungen $a_{wu}$ zumindest mit der Istbeschleunigung $a_e$ und der momentanen Fahrgeschwindigkeit $v_e$ einer Einheit STB zur Berechnung der Stellgrößen $D_{ks}$, $B_{rs}$ sowohl für die Antriebsmaschine als auch für die Bremsanlage des Kraftfahrzeuges zugeleitet.

In Figur 2a ist das detaillierte Schaltbild einer Einrichtung zur Abstandsregelung mit einem System von verknüpften mehrdimensionalen Fuzzy-Reglern 1 bis 10 gezeigt. Die Abstandsregelung ist als fahrerunterstützendes System konzipiert, das in der Lage ist, das individuelle Fahrverhalten eines Fahrers nachzubilden.

Die Einheit AFDR, die die abstandsabhängige Sollbeschleunigung $a_{wu1}$ ermittelt, besteht aus dem zweidimensionalen Fuzzy-Reglers, dem als Eingangsgrößen die momentane Fahrgeschwindigkeit $v_e$ des Kraftfahrzeuges und der vorherrschende Reibwert r der Straße zugeführt werden. Aus den beiden Eingangsgrößen ermittelt der Fuzzy-Regler 5 einen Sollabstand $d_{soll}$ zu einem vorausfahrenden Fahrzeug. Zur Erhöhung der Akzeptanz der Abstandsregelung kann dieser Regler in einer Lernphase auf den jeweiligen Fahrzeugführer adaptierbar sein.

Über die Einrichtung 12 werden bestimmte Fahrzustände, beispielsweise dicht einscherende Fahrzeuge, erkannt und ein fahrsituationsabhängiger Sollabstand d'$_{soll}$ ermittelt, der gemeinsam mit dem Sollabstand d$_{soll}$ auf den MIN-Operator 13 geführt ist, so daß der kleinere Wert d*$_s$ der beiden Sollabstände d$_{soll}$, d'$_{soll}$ für die Abstandsregelung Berücksichtigung findet. Wenn der Regler 5 nicht adaptierbar ausbildet ist, kann zusätzlich von Fahrer über einen Schalter im Kraftfahrzeug ein fahrerindividueller Abstandswert $\Delta d_0$, der die Fahrweise des jeweiligen Fahrers berücksichtigt, eingestellt werden, der im Operator 14 dem Wert d$_{soll}$ hinzuaddiert wird. In diesem Fall wird der modifizierte Sollabstand d*$_{soll}$ mit dem fahrsituationsabhängigen Sollabstand d'$_{soll}$ verglichen Bei einem sehr sportlich fahrenden Fahrzeugführer ist $\Delta d_0$ sehr klein oder Null. Der Sollabstand d*$_s$ wird einem weiteren Operator 15 zugeführt, dem außerdem der momentane Abstand d$_0$ zum vorausfahrenden Kraftfahrzeug zugeleitet wird. Im Operator 15 wird der momentane Abstand d$_0$ auf den modifizierten Abstand d*$_s$ bezogen und die Abweichung

$$d_0\big/d^*{}_s$$

gebildet. Diese Abweichung wird nun mit der momentanen Fahrgeschwindigkeit v$_e$ und der Relativgeschwindigkeit v$_r$ zum vorausfahrenden Fahrzeug einem Fuzzy-Regler 4 zugeführt, der aus diesen Größen die abstandsabhängige Sollbeschleunigung a$_{wu1}$ ermittelt.

Die Einheit FGRA der Abstandsregelung, die die geschwindigkeitsabhängige Sollbeschleunigung a$_{wu2}$ ermittelt, weist einen Fuzzy-Regler 1 auf, dem zur Bildung der Sollbeschleunigung a$_{wu2}$ die momentane Fahrgeschwindigkeit v$_e$ sowie die Differenz zwischen einer Wunschgeschwindigkeit v*$_{wu}$ und der Fahrgeschwindigkeit v$_e$ die im Operator 16 gebildet wird, aufgeschaltet werden. Die Wunschgeschwindigkeit v*$_{wu}$ berücksichtigt im Ausführungsbeispiel mehrere geschwindigkeitsrelevante Größen. Sie kann einmal die manuelle vom Fahrzeugführer vorgebbare Wunschgeschwindigkeit v$_{wu}$, eine kurvenabhängige Sollgeschwindigkeit v$_{kur}$ sowie eine virtuelle Sollgeschwindigkeit v$_{virt}$ darstellen. Die Geschwindigkeitswerte werden über den MIN-Operator 17 miteinander verglichen und der kleinste Geschwindigkeitswert wird als Wunschgeschwindigkeit v*$_{wu}$ dem Operator 16 zugeleitet. Die virtuelle Sollgeschwindigkeit v$_{virt}$ wird in der Einrichtung 19 in Abhängigkeit von vorgebbaren Fahrzuständen ermittelt. Zur Bildung der kurvenabhängigen Sollgeschwindigkeit v$_{kur}$ wird nach dem Ausführungsbeispiel dem Fuzzy-Regler 8 der erfaßte Querschlupf q oder auch die Querbeschleunigung und der vorherrschende Reibwert r als Eingangsgrößen zugeführt, der einen kurvenabhängigen Geschwindigkeitswert v$_{kur1}$ bildet. Des weiteren ist ein weiterer Fuzzy-Regler 10 vorgesehen, der aus der momentanen Fahrgeschwindigkeit v$_e$ und dem Querschlupf q einen Differenzgeschwindigkeitswert $\Delta v_{kur}$ bildet, der dem Geschwindigkeitswert v$_{kur1}$ im Operator 18

hinzuaddiert wird.

Zur Bildung des Differenzgeschwindigkeitswertes $\Delta v_{kur}$ kann alternativ vorgesehen sein, aus dem Querschlupf q und dem Reibwert r einen maximal zulässigen Querschlupf q$_{max}$ zu berechnen, und den Betrag der Differenz von maximal zulässigen Querschlupf q$_{max}$ und dem momentanen Querschlupf q dem Fuzzy-Regler 10 zuzuführen.

Die abstandsabhängige Sollbeschleunigung a$_{wu1}$ und die geschwindigkeitsabhängige Sollbeschleunigung a$_{wu2}$ werden, wie in Figur 2b gezeigt, über den Operator 11 miteinander verglichen und die kleinere der beiden Sollbeschleunigungen a$_{wu}$ der Einheit STB zur Berechnung der Stellgrößen D$_{ks}$ und B$_{rs}$ zugeführt. Eine weitere Möglichkeit besteht darin, die abstandabhängige Sollbeschleunigung a$_{wu1}$ und die geschwindigkeitsabhängige Sollbeschleunigung a$_{wu2}$ fahrsituationsabhängig zu bewerten und in Abhängigkeit der Bewertung eine der beiden Sollbeschleunigungen a$_{wu}$ der Einheit STB zu übergeben.

Die Einheit weist einen Fuzzy-Regler 9 auf, der über seine Eingangsgrößen, die Fahrgeschwindigkeit v$_e$ und die Betätigungszeit t$_{bl}$ der linken Blinkeinrichtung des Kraftfahrzeuges Überholvorgänge interpretiert und daraufhin einen Beschleunigungsfaktor F$_a$ erzeugt, mit dem die Sollbeschleunigung a$_{wu}$ im Operator 21 multipliziert wird. Die so gebildete Sollbeschleunigung a*$_{wu}$ wird dem Fuzzy-Reglern 2 und 6 zur Bildung der Stellgrößen D$_{ks}$, B$_{rs}$ sowie dem Operator 22 zugeleitet. Der Operator 22 bildet als Eingangsgröße für die beiden Fuzzy-Regler 2, 6 die Differenz zwischen der Sollbeschleunigung a*$_{wu}$ und der Istbeschleunigung a$_e$ des Kraftfahrzeuges. Die momentane Fahrgeschwindigkeit v$_e$ und der vorherrschende Reibwert r bilden weitere Eingangsgrößen der Fuzzy-Regler 2 und 6.

### BEZUGSZEICHENLISTE

| | |
|---|---|
| 1 | Regler |
| 2 | Regler |
| 3 | Regler |
| 4 | Regler |
| 5 | Regler |
| 6 | Regler |
| 8 | Regler |
| 9 | Regler |
| 10 | Regler |
| 11 | Operator |
| 12 | Einrichtung zur Ermittlung des fahrsituationsabhängigen Sollabstandes |
| 13 | MIN-Operator |
| 14 | Operator |
| 15 | Operator |
| 16 | Operator |
| 17 | MIN-Operator |
| 18 | Operator |

| 19 | Einrichtung |
| 21 | Operator |
| 22 | Operator |
| $a_{wu1}$ | abstandsabhängige Sollbeschleunigung |
| $a_{wu2}$ | geschwindigkeitsabhängige Sollbeschleunigung |
| $v_{wu}$ | vorgebbare Wunschgeschwindigkeit |
| $D_{ks}$ | Stellgröße für die Antriebsmaschine |
| $B_{rs}$ | Stellgröße für die Bremsanlage |
| $v_e$ | momentane Fahrgeschwindigkeit |
| $d_{soll}$ | Sollabstand |

**BEZUGSZEICHENLISTE**

| $d_0$ | momentaner Sollabstand |
| $v_r$ | Relativgeschwindigkeit |
| $v_{wu} - v_e$ | Größe |
| r | Reibwert |
| $d'_{soll}$ | fahrsituationsabhängiger Sollabstand |
| $d^*_{soll}$ | Sollabstandswert |
| $\Delta d_0$ | fahrerindividueller Abstandswert |
| $d^*_s$ | modifizierter Sollabstand |

$$\left(\frac{d_0}{d^*_s}\right)$$

Abweichung

| $v^*_{wu}$ | Wunschgeschwindigkeit |
| $v_{kur}$ | kurvenabhängige Sollgeschwindigkeit |
| $v_{virt}$ | virtuelle Wunschgeschwindigkeit |
| q | Querschlupf |
| $q_{max}$ | maximal zulässiger Querschlupf |
| $v_{kur1}$ | kurvenabhängiger Geschwindigkeitswert |
| $\Delta v_{kur}$ | Differenzgeschwindigkeitswert |
| $F_a$ | Beschleunigungsfaktor |
| $a_e$ | momentaner Beschleunigungswert |

**Patentansprüche**

1. Verfahren zur Abstandsregelung für ein Kraftfahrzeug, bei dem über Sensoreinrichtungen zumindest die momentane Fahrgeschwindigkeit des Kraftfahrzeuges und der momentane Abstand zu einem vor dem Kraftfahrzeug befindlichen Objekt ermittelt werden und aus den erfaßten Größen eine abstandsabhängige Sollbeschleunigung gebildet wird, **dadurch gekennzeichnet, daß** die abstandsabhängige Sollbeschleunigung ($a_{wu1}$) und eine zumindest aus einer manuell vorgebbaren Wunschgeschwindigkeit ($v_{wu}$) ermittelte geschwindigkeitsabhängige Sollbeschleunigung ($a_{wu2}$) miteinander verglichen werden und in Abhängigkeit von dem Vergleichsergebnis eine der beiden Sollbeschleunigungen ($a_{wu1}$, $a_{wu2}$) als erzeugter Sollbeschleunigungswert ($a_{wu}$) zur Bildung einer Stellgröße ($D_{ks}$, $B_{rs}$) für die Antriebsmaschine und/oder die Bremsanlage gebildet wird.

2. Verfahren nach Anspruch 1, **dadurch gekennzeichnet, daß** die abstandsabhängige Sollbeschleunigung ($a_{wu1}$) und die geschwindigkeitsabhängige Sollbeschleunigung ($a_{wu2}$) fahrsituationsabhängig in Beziehung gesetzt werden.

3. Verfahren nach Anspruch 1 oder 2, **dadurch gekennzeichnet, daß** einem ersten Regler (6) zumindest die momentane Fahrgeschwindigkeit ($v_e$) als Eingangsgröße zugeführt wird, der einen Sollabstand ($d_{soll}$) zu dem vor dem Kraftfahrzeug befindlichen Objekt bildet, ein erfaßter momentaner Abstand ($d_0$) zu dem vor dem Kraftfahrzeug befindlichen Objekt auf den Sollabstand ($d_{soll}$) zur Ermittlung einer Abweichung

$$\left(\frac{d_0}{d_{soll}}\right)$$

bezogen wird, und die Abweichung

$$\left(\frac{d_0}{d_{soll}}\right)$$

und eine ermittelte Relativgeschwindigkeit ($v_r$) zwischen dem Kraftfahrzeug und dem Objekt einem zweiten Regler (4) zugeführt werden, welcher die abstandsabhängige Sollbeschleunigung ($a_{wu1}$) ermittelt.

4. Verfahren nach Anspruche 3, **dadurch gekennzeichnet, daß** einem dritten Regler (1) die momentane Fahrgeschwindigkeit ($v_e$) und eine Größe ($v_{wu} - v_e$), die die manuell vorgebbare Wunschgeschwindigkeit ($v_{wu}$) zu der momentanen Fahrgeschwindigkeit ($v_e$) in Beziehung setzt, zugeführt werden und der dritte Regler (1) die fahrgeschwindigkeitsabhängige Sollbeschleunigung ($a_{wu2}$) bildet.

5. Verfahren nach Anspruch 4, **dadurch gekennzeichnet, daß** der Sollbeschleunigungswert ($a_{wu}$) einem vierten Regler (2) zur Bildung der Stellgröße ($D_{ks}$) für die Antriebsmaschine und einem fünften Regler (6) zur Bildung der Stellgröße ($B_{rs}$) für die Bremsanlage zugeleitet wird.

6. Verfahren nach einem der Ansprüche 3 bis 5, **dadurch gekennzeichnet, daß** dem ersten Regler (5) als weitere Eingangsgröße der vorherrschende Reibwert (r) und/oder eine Größe für die vorherrschenden Sichtverhältnisse zugeführt wird.

**7.** Verfahren nach einem der Ansprüche 1 bis 6, **dadurch gekennzeichnet, daß** der Sollabstand ($d_{soll}$) zu einem fahrsituationsabhängigen Sollabstand ($d'_{soll}$) in Beziehung gesetzt wird und der momentane Abstand ($d_0$) zu dem Objekt auf den so erzeugten Wert ($d^*_{soll}$) der Sollabstände ($d_{soll}$, $d'_{soll}$) bezogen wird.

**8.** Verfahren nach einem der Ansprüche 1 bis 7, **dadurch gekennzeichnet, daß** der Sollabstand ($d_{soll}$) fahrerindividuell abgestimmt wird.

**9.** Verfahren nach einem der Ansprüche 3 bis 7, **dadurch gekennzeichnet, daß** der erste Regler (5) und/oder der zweite Regler (4) fahrerspezifisch adaptiert wird.

**10.** Verfahren nach einem der Ansprüche 3 bis 9, **dadurch gekennzeichnet, daß** dem zweiten Regler (4) als weitere Eingangsgröße die momentane Fahrgeschwindigkeit ($v_e$) zugeführt wird.

**11.** Verfahren nach einem der Ansprüche 1 bis 10, **dadurch gekennzeichnet, daß** die manuell vorgebbare Wunschgeschwindigkeit ($v_{wu}$) in Abhängigkeit einer kurvenabhängigen Sollgeschwindigkeit ($v_{kur}$; $v_{kur1}$) veränderbar ist.

**12.** Verfahren nach einem der Ansprüche 5 bis 11, **dadurch gekennzeichnet, daß** einem sechsten Regler (8) zumindest ein ermittelter Querschlupf (q) und der vorherrschende Reibwert (r) zugeführt werden und der Regler (8) die kurvenabhängige Sollgeschwindigkeit ($v_{kur1}$) bildet.

**13.** Verfahren nach Anspruch 11 oder 12, **dadurch gekennzeichnet, daß** die kurvenabhängige Sollgeschwindigkeit ($v_{kur}$) in Abhängigkeit der momentanen Fahrgeschwindigkeit ($v_e$) gebildet wird.

**14.** Verfahren nach einem der Ansprüche 1 bis 13, **dadurch gekennzeichnet, daß** in Abhängigkeit vorgegebener Fahrzustände eine virtuelle Wunschgeschwindigkeit ($v_{wu}$, $v_{virt}$) gebildet wird, in deren Abhängigkeit die vorgegebene Wunschgeschwindigkeit ($v_{wu}$) verändert wird.

**15.** Verfahren nach einem der Ansprüche 12 bis 14, **dadurch gekennzeichnet, daß** einem siebenten Regler (9) die momentane Fahrgeschwindigkeit ($v_e$) und eine erfaßte Betätigungszeit ($t_{bl}$) eines einen Überholvorgang des Kraftfahrzeuges erfassenden Einrichtung zugeführt werden und der Regler (9) einen Beschleunigungsfaktor ($F_a$) erzeugt, mit welchem der Sollbeschleunigungswert ($a_{wu}$) zur Bildung der Stellgrößen ($D_{ks}$, $B_{rs}$) verändert wird.

**16.** Verfahren nach einem der Ansprüche 5 bis 15, **da-**

**durch gekennzeichnet, daß** dem vierten Regler (2) zur Bildung der Stellgröße ($D_{ks}$) für die Antriebsmaschine neben der Sollbeschleunigung ($a_{wu}$) die momentane Fahrgeschwindigkeit ($v_e$) und die Differenz zwischen der Sollbeschleunigung ($a_{wu}$) und der Istbeschleunigung ($a_e$) des Kraftfahrzeuges zugeführt wird.

**17.** Verfahren nach Anspruch 16, **dadurch gekennzeichnet, daß** dem vierten Regler (2) außerdem der vorherrschende Reibwert (r) zugeführt wird.

**18.** Verfahren nach einem der Ansprüche 5 bis 17, **dadurch gekennzeichnet, daß** dem fünften Regler (6) zur Bildung der Stellgröße ($B_{rs}$) für die Bremsanlage neben der Sollbeschleunigung ($a_{wu}$) die momentane Fahrgeschwindigkeit ($v_e$) und die Differenz zwischen der Sollbeschleunigung ($a_{wu}$) und einer erfaßten Istbeschleunigung ($a_e$) des Kraftfahrzeuges zugeführt wird.

**19.** Verfahren nach Anspruch 18, **dadurch gekennzeichnet, daß** dem fünften Regler (6) außerdem der vorherrschende Reibwert (r) zugeführt wird.

**20.** Vorrichtung zur Durchführung des Verfahrens nach einem der Ansprüche 1 bis 19 mit einem System von verknüpften Fuzzy-Reglern (1 - 9).

**21.** Vorrichtung nach Anspruch 20, **dadurch gekennzeichnet, daß** die Fuzzy-Regler (1 - 9) in ihren Zugehörigkeitsfunktionen und ihren Regeln adaptierbar sind.

**Revendications**

**1.** Procédé de commande de distance entre un véhicule et d'autres objets, avec lequel au moins la vitesse de déplacement momentanée du véhicule et la distance momentanée par rapport à un objet se trouvant devant le véhicule sont déterminées à l'aide de dispositifs de détection et une accélération de consigne en fonction de la distance est calculée à partir des grandeurs détectées, **caractérisé en ce que** l'accélération de consigne ($a_{wu1}$) est comparée avec une accélération de consigne en fonction de la vitesse ($a_{wu2}$) déterminée au moins à partir d'une vitesse voulue pouvant être prédéfinie manuellement ($v_{wu}$) et, en fonction du résultat de la comparaison, l'une des deux accélération de consigne ($a_{wu1}$, $a_{wu2}$) est calculée sous la forme d'une valeur d'accélération de consigne ($a_{wu}$) pour calculer une grandeur de commande ($D_{ks}$, $B_{rs}$) pour le mécanisme d'entraînement et/ou l'équipement de freinage.

**2.** Procédé selon la revendication 1, **caractérisé en**

**ce que** l'accélération de consigne en fonction de la distance ($a_{wu1}$) et l'accélération de consigne en fonction de la vitesse ($a_{wu2}$) sont mises en relation en fonction de la situation de conduite.

3. Procédé selon la revendication 1 ou 2, **caractérisé en ce qu'**au moins la vitesse de déplacement momentanée ($v_e$) est acheminée à un premier régulateur (6) en tant que grandeur d'entrée, laquelle représente une distance de consigne ($d_{soll}$) par rapport à l'objet qui se trouve devant le véhicule, une distance momentanée détectée ($d_0$) par rapport à l'objet qui se trouve devant le véhicule est rapportée à la distance de consigne ($d_{soll}$) pour déterminer une différence ($d_0/d_{soll}$) et la différence ($d_0/d_{soll}$) et une vitesse relative déterminée ($v_r$) entre le véhicule et l'objet sont acheminées à un deuxième régulateur (4) qui détermine l'accélération de consigne en fonction de la distance ($a_{wu1}$).

4. Procédé selon la revendication 3, **caractérisé en ce que** la vitesse de déplacement momentanée ($v_e$) et une grandeur ($v_{wu}$ - $v_e$), qui met en relation la vitesse voulue pouvant être prédéfinie manuellement ($v_{wu}$) et la vitesse de déplacement momentanée ($v_e$), sont acheminées à un troisième régulateur (1) et le troisième régulateur (1) calcule l'accélération de consigne en fonction de la vitesse ($a_{wu2}$).

5. Procédé selon la revendication 4, **caractérisé en ce que** l'accélération voulue ($a_{wu}$) est acheminée à un quatrième régulateur (2) pour calculer la grandeur de commande ($D_{ks}$) pour le mécanisme d'entraînement et à un cinquième régulateur (6) pour calculer la grandeur de commande ($B_{rs}$) de l'équipement de freinage.

6. Procédé selon l'une des revendications 3 à 5, **caractérisé en ce que** le coefficient de frottement dominant (r) et/ou une grandeur correspondant aux conditions de visibilité dominantes est acheminé à un cinquième régulateur (5) en tant que grandeur d'entrée.

7. Procédé selon l'une des revendications 1 à 6, **caractérisé en ce que** la distance de consigne ($d_{soll}$) est mise en relation avec une distance de consigne dépendante de la situation de conduite ($d'_{soll}$) et la distance momentanée ($d_0$) par rapport à l'objet se rapporte à la valeur ($d^*_{soll}$) ainsi obtenue des distances de consigne ($d_{soll}$, $d'_{soll}$).

8. Procédé selon l'une des revendications 1 à 7, **caractérisé en ce que** la distance de consigne ($d_{soll}$) est déterminée individuellement en fonction du conducteur.

9. Procédé selon l'une des revendications 3 à 7, **ca-**

**ractérisé en ce que** le premier régulateur (5) et/ou le deuxième régulateur (4) est adapté spécifiquement au conducteur.

10. Procédé selon l'une des revendications 3 à 9, **caractérisé en ce que** la vitesse de déplacement momentanée ($v_e$) est acheminée au deuxième régulateur (4) en tant que grandeur d'entrée supplémentaire.

11. Procédé selon l'une des revendications 1 à 10, **caractérisé en ce que** la vitesse voulue pouvant être prédéfinie manuellement ($v_{wu}$) peut être modifiée en fonction d'une vitesse de consigne dépendant du virage ($v_{kur}$ ; $v_{kur1}$).

12. Procédé selon l'une des revendications 5 à 11, **caractérisé en ce qu'**au moins un glissement transversal déterminé (q) et le coefficient de frottement dominant (r) sont acheminés à un sixième régulateur (8) et le régulateur (8) calcule la vitesse de consigne dépendant du virage ($v_{kur1}$).

13. Procédé selon la revendication 11 ou 12, **caractérisé en ce que** la vitesse de consigne dépendant du virage ($v_{kur}$) est calculée en fonction de la vitesse de déplacement momentanée ($v_e$).

14. Procédé selon l'une des revendications 1 à 13, **caractérisé en ce qu'**une vitesse voulue virtuelle ($v_{wu}$, $v_{virt}$) est calculée en fonction de situations de conduite prédéfinies et la vitesse voulue prédéfinie ($v_{wu}$) est modifiée en fonction de celle-ci.

15. Procédé selon l'une des revendications 12 à 14, **caractérisé en ce que** la vitesse de déplacement momentanée ($v_e$) et un temps d'activation détecté ($t_{bl}$) d'un dispositif qui détecte une opération de dépassement du véhicule sont acheminés à un septième régulateur (9) et le régulateur (9) produit un facteur d'accélération ($F_a$) avec lequel est modifiée la valeur de l'accélération de consigne ($a_{wu}$) pour calculer les grandeurs de commande ($D_{ks}$, $B_{rs}$).

16. Procédé selon l'une des revendications 5 à 15, **caractérisé en ce que** la vitesse de déplacement momentanée ($v_e$) et la différence entre l'accélération de consigne ($a_{wu}$) et l'accélération réelle ($a_e$) du véhicule sont acheminées au quatrième régulateur (2) en plus de l'accélération de consigne ($a_{wu}$) pour calculer la grandeur de commande ($D_{ks}$) du mécanisme d'entraînement.

17. Procédé selon la revendication 16, **caractérisé en ce que** le coefficient de frottement dominant (r) est également acheminé au quatrième régulateur (2).

18. Procédé selon l'une des revendications 5 à 17, **ca-**

ractérisé en ce que la vitesse de déplacement momentanée ($v_e$) et la différence entre l'accélération de consigne ($a_{wu}$) et une accélération réelle détectée ($a_e$) du véhicule sont acheminées au cinquième régulateur (6) en plus de l'accélération de consigne ($a_{wu}$) pour calculer la grandeur de commande ($B_{rs}$) de l'équipement de freinage.

19. Procédé selon la revendication 18, **caractérisé en ce que** le coefficient de frottement dominant (r) est également acheminé au cinquième régulateur (6).

20. Dispositif pour réaliser le procédé selon l'une des revendications 1 à 19 comprenant un système de régulateurs à logique floue combinés (1 - 9).

21. Dispositif selon la revendication 20, **caractérisé en ce que** les régulateurs à logique floue (1 - 9) peuvent être adaptés au niveau de leurs fonctions d'association et de leurs règles.

## Claims

1. Method for distance control for a motor vehicle, in which at least the instantaneous driving speed of the motor vehicle and the instantaneous distance to an object in front of the motor vehicle are determined via sensor devices, and a distance-dependent required acceleration is formed from the registered variables, **characterized in that** the distance-dependent required acceleration ($a_{wu1}$) and a speed-dependent required acceleration ($a_{wu2}$), determined at least from a manually predefinable desired speed ($v_{wu}$), are compared with one another, and, on the basis of the comparison result, one of the two required accelerations ($a_{wu1}$, $a_{wu2}$) is formed as the generated required acceleration value ($a_{wu}$) for forming a manipulated variable ($D_{ks}$, $B_{rs}$) for the driving engine and/or the braking system.

2. Method according to Claim 1, **characterized in that** the distance-dependent required acceleration ($a_{wu1}$) and the speed-dependent required acceleration ($a_{wu2}$) are brought into a relationship as a function of the driving situation.

3. Method according to Claim 1 or 2, **characterized in that** a first controller (6) is fed at least the instantaenous driving speed ($v_e$) as input variable, and forms a required distance ($d_{soll}$) to the object in front of the motor vehicle, a registered instantaneous distance ($d_0$) to the object in front of the motor vehicle is brought into relation with the required distance ($d_{soll}$) to determine a deviation ($d_0/d_{soll}$), and the deviation ($d_0/d_{soll}$) and a determined relative speed ($v_r$) between the motor vehicle and the object are fed to a second controller (4), which determines the distance-related required acceleration ($a_{wu1}$).

4. Method according to Claim 3, **characterized in that** a third controller (1) is fed the instantaneous driving speed ($v_e$) and a variable ($v_{wu}-v_e$) which relates the manually predefinable desired speed ($v_{wu}$) to the instantaneous driving speed ($v_e$), and the third controller (1) forms the driving speed-dependent required acceleration ($a_{wu2}$).

5. Method according to Claim 4, **characterized in that** the required acceleration value ($a_{wu}$) is fed to a fourth controller (2) for forming the manipulated variable ($D_{ks}$) for the driving engine and to a fifth controller (6) for forming the manipulated variable ($B_{rs}$) for the braking system.

6. Method according to one of Claims 3 to 5, **characterized in that** the first controller (5) is fed as further input variable the prevailing friction coefficient (r) and/or a variable for the prevailing visibility conditions.

7. Method according to one of Claims 1 to 6, **characterized in that** the required distance ($d_{soll}$) is brought into a relationship with a driving situation-related required distance ($d'_{soll}$), and the instantaneous distance ($d_0$) to the object is brought into relation with the value ($d^*_{soll}$) of the required distances ($d_{soll}$, $d'_{soll}$) thus generated.

8. Method according to one of Claims 1 to 7, **characterized in that** the required distance ($d_{soll}$) is adapted in a manner individual to the driver.

9. Method according to one of Claims 3 to 7, **characterized in that** the first controller (5) and/or the second controller (4) are adapted in a manner specific to the driver.

10. Method according to one of Claims 3 to 9, **characterized in that** the second controller (4) is fed as further input variable the instantaneous driving speed ($v_e$).

11. Method according to one of Claims 1 to 10, **characterized in that** the manually predefinable desired speed ($v_{wu}$) may be changed as a function of a curve-dependent required speed ($v_{kur}$; $v_{kur1}$).

12. Method according to one of Claims 5 to 11, **characterized in that** a sixth controller (8) is fed at least a determined transverse slip (q) and the prevailing friction coefficient (r), and the controller (8) forms the curve-dependent required speed ($v_{kur1}$).

13. Method according to Claim 11 or 12, **characterized**

**in that** the curve-dependent required speed ($v_{kur}$) is formed as a function of the instantaneous driving speed ($v_e$).

14. Method according to one of Claims 1 to 13, **characterized in that**, as a function of predefined driving conditions, a virtual desired speed ($v_{wu}$, $v_{virt}$) is formed, as a function of which the predefined desired speed ($v_{wu}$) is changed.

15. Method according to one of Claims 12 to 14, **characterized in that** a seventh controller (9) is fed the instantaneous driving speed ($v_e$) and a registered actuating time ($t_{bl}$) of a device registering an overtaking procedure of the motor vehicle, and the controller (9) generates an acceleration factor ($F_a$) with which the required acceleration value ($a_{wu}$) is changed to form the manipulated variables ($D_{ks}$, $B_{rs}$).

16. Method according to one of Claims 5 to 15, **characterized in that**, in order to form the manipulated variable ($D_{ks}$) for the driving engine, the fourth controller (2) is fed, in addition to the required acceleration ($a_{wu}$), the instantaneous driving speed ($v_e$) and the difference between the required acceleration ($a_{wu}$) and the current acceleration ($a_e$) of the motor vehicle.

17. Method according to Claim 16, **characterized in that** the fourth controller (2) is additionally fed the prevailing friction coefficient ($r$).

18. Method according to one of Claims 5 to 17, **characterized in that**, in order to form the manipulated variable ($B_{rs}$) for the braking system, the fifth controller (6) is fed, in addition to the required acceleration ($a_{wu}$), the instantaneous driving speed ($v_e$) and the difference between the required acceleration ($a_{wu}$) and a registered current acceleration ($a_e$) of the motor vehicle.

19. Method according to Claim 18, **characterized in that** the fifth controller (6) is additionally fed the prevailing friction coefficient ($r$).

20. Device for carrying out the method according to one of Claims 1 to 19, having a system of interlinked fuzzy controllers (1-9).

21. Device according to Claim 20, **characterized in that** the fuzzy controllers (1-9) can be adapted in terms of their membership functions and their rules.

FIG. 1

FIG. 2a

FIG. 2b